# EUROPÄISCHE PATENTSCHRIFT

(11) **EP 3 732 948 B1**
(45) Veröffentlichungstag und Bekanntmachung des Hinweises auf die Patenterteilung: **08.03.2023**
(21) Anmeldenummer: 20151431.2
(22) Anmeldetag: 13.01.2020
(51) Int. Cl.: A01D 34/23, A01D 34/30, A01D 63/04, A01D 41/14

(54) **SCHNEIDWERK**
CUTTING UNIT
DISPOSITIF DE COUPE

(30) Priorität: 30.04.2019 DE 102019111212
(43) Veröffentlichungstag der Anmeldung: 04.11.2020
(73) Patentinhaber: CLAAS Selbstfahrende Erntemaschinen GmbH, 33428 Harsewinkel (DE)
(72) Erfinder: Dudler, Heribert, 33428 Harsewinkel (DE); Dehmelt, Jan, 33649 Bielefeld (DE)
(74) Vertreter: CLAAS Gruppe

(56) Entgegenhaltungen:
- EP-A1- 2 647 276
- EP-A1- 3 607 811
- WO-A1-03/049532
- WO-A1-2013/089224
- DE-A1- 3 139 601
- US-A- 2 277 297
- US-B2- 9 615 512

## Beschreibung

Die vorliegende Erfindung betrifft ein Schneidwerk gemäß dem Oberbegriff des Anspruches 1.

Schneidwerke kommen zum Ernten von unterschiedlichen Fruchtarten wie Getreide, Raps und dergleichen zum Einsatz. Ein Schneidwerk umfasst einen Rahmen und eine daran angeordnete Schneidwerksmulde, einen der Schneidwerksmulde vorgeordneten Schneidtisch mit einem daran angeordneten, durch zumindest ein Getriebe oszillierend angetriebenen Messerbalken, eine rotativ angetriebenen Haspel, die mittels Tragarmen an der Schneidwerksmulde geführt und gegenüber dieser in oder entgegen der Mährichtung verstellbar ist, sowie zumindest einem endseitig an dem Rahmen lösbar angeordneten Trennmesser, welches sich im Wesentlichen vertikal zu dem Messerbalken erstreckt. Einzelne Komponenten der Schneidwerke sind an die jeweilige zu erntende Fruchtart durch eine gezielte Einstellung anpassbar, wie beispielsweise die Ausfahrlänge einer Haspel. Weiterhin sind zusätzliche Komponenten an dem Schneidwerk montierbar, im Fall unter anderem von Raps die Trennmesser oder sogenannten Rapsmesser. Die seitlich angeordneten Trennmesser dienen dazu, stark ineinander verschlungenes Erntegut beiderseits des Schneidwerks in einer vertikalen Ebene zu zerteilen, um Ernteverluste zu reduzieren. Bei Sonderkulturen wie beispielsweise Raps, die eine starke Verwachsung der Stängel und Fruchtteile ineinander zeigen, gewährleisten die Trennmesser eine gute Trennung des Halmgutes zwischen dem noch stehenden und dem vom Schneidtisch aufzunehmenden Erntegutes. Ernteverluste, die mit der Verwendung eines üblichen passiven Halmteilers einhergingen, werden so vermieden. Das Schneidwerk wird an einer Aufnahmevorrichtung eines Mähdreschers aufgenommen, welcher die für den Betrieb des Schneidwerkes notwendigen Antriebskräfte bereitstellt. Hierzu wird das Schneidwerk an ein Hydrauliksystem des Mähdreschers sowie an einen mechanischen Antriebsstrang des Mähdreschers anschlossen.

Ein Schneidwerk der eingangs genannten Art ist aus der EP 2 647 276 A1 bekannt. Darin wird ein Schneidwerk mit einem Rahmen und einer daran angeordneten Schneidwerksmulde, einem der Schneidwerksmulde vorgeordneten Schneidtisch mit einem daran angeordneten oszillierend angetriebenen Messerbalken, sowie zumindest einem endseitig an dem Rahmen lösbar angeordneten Trennmesser, welches sich im Wesentlichen vertikal zu dem Messerbalken erstreckt beschrieben. Zum Antreiben von an dem Mähbalken angeordneten Mähmessern ist jeweils ein Getriebe endseitig an in Mährichtung weisenden Seitenwänden des Rahmens angeordnet, welche jeweils eine Rotationsbewegung einer an dem Schneidwerk angeordneten Antriebswelle in eine oszillierend translatorische Bewegung der Mähmesser umsetzen. Die Getriebe sind als Kegelradgetriebe ausgeführt, wobei ein Kegelrad mit einer von einem Mähdrescher angetriebenen, horizontal verlaufenden Abtriebswelle verbunden ist. Das Kegelrad treibt ein unter einem Winkel von 90° angeordnetes Kegelrad an, welches die Rotationsbewegung an ein unterhalb des angetriebenen Kegelrades nachgeordnetes Getriebe zum Antreiben an den Messerbalken überträgt. An dem an der Abtriebswelle angeordneten Kegelrad ist eine ebenfalls horizontal verlaufende Ausgangswelle angeschlossen, welcher dem Antrieb eines der endseitig an dem Rahmen angeordneten Trennmesser dient.

Ein gattungsgemäßes Schneidwerk ist aus WO 03/049532 A1 bekannt.

Ausgehend vom vorstehend genannten Stand der Technik liegt der Erfindung die Aufgabe zugrunde, ein Schneidwerk in der Weise weiterzubilden, dass es sich durch eine erhöhte Funktionssicherheit auszeichnet.

Diese Aufgabe wird erfindungsgemäß durch ein Schneidwerk gemäß den Merkmalen des Anspruches 1 gelöst.

Gemäß dem Anspruch 1 wird ein Schneidwerk vorgeschlagen, mit einem Rahmen und einer daran angeordneten Schneidwerksmulde, einem der Schneidwerksmulde vorgeordneten Schneidtisch mit einem daran angeordneten, durch zumindest ein Getriebe oszillierend angetriebenen Messerbalken, einer rotativ angetriebenen Haspel, die mittels Tragarmen an der Schneidwerksmulde geführt und gegenüber dieser in oder entgegen einer Mährichtung verstellbar ist, sowie zumindest einem endseitig an dem Rahmen lösbar angeordneten Trennmesser, welches sich im Wesentlichen vertikal zu dem Messerbalken erstreckt, wobei der Schneidtisch gegenüber der Schneidwerksmulde in oder entgegen der Mährichtung verschiebbar ist, wobei eine Antriebsvorrichtung des zumindest einen Trennmessers in einem bodennahen Bereich befindet, wobei die Antriebsvorrichtung durch ein Koppelgetriebe mit dem Messerbalken verbunden ist, welches die oszillierende Bewegung des Messerbalkens auf das zumindest eine Trennmesser übertragt. Durch die bodennahe Anordnung der Antriebsvorrichtung des zumindest einen Trennmessers kann eine Kollision zwischen diesem und der Haspel vermieden werden, insbesondere dann, wenn der Schneidtisch und die Haspel, beispielsweise zu Transportzwecken, entgegen der Mährichtung vollständig eingefahren werden muss. Der Schneidtisch ist entlang eines Verfahrweges verstellbar, wobei dieser ausgehend von einer Ausgangsposition in Mährichtung ausgefahren wird, was einem positiven Verfahrweg entspricht. Darüber hinaus ist der Schneidtisch über die Ausgangsposition entgegen der Mährichtung verfahrbar, was einem negativen Verfahrweg entspricht. Der positive Verfahrweg ist größer als der negative Verfahrweg. Die Haspel wird entsprechend des Verfahrweges des Schneidtisches verfahren, um Kollisionen zu vermeiden. Das Verfahren der Haspel entgegen der Mährichtung ist bei montiertem Trennmesser aufgrund der kollisionsfreien Anordnung der Antriebsvorrichtung des Trennmessers möglich. Dies ermöglicht darüber hinaus den Einsatz der Trennmesser beim Ernten von Getreide oder Bohnen, wenn der Pflanzenbestand stark verschlungen ist, wobei der Schneidtisch und die Haspel entlang des negativen Verfahrweges verstellt werden. Bodennahe Anordnung der Antriebsvorrichtung bedeutet, dass die Komponenten der Antriebsvorrichtung, die schneidtischseitig angeordnet sind, auf gleicher Höhe mit dem zumindest einen Getriebe oder unterhalb des zumindest einen Getriebes, das den Messerbalken antreibt, angeordnet sind.

Hierbei kann das Koppelgetriebe eine an dem Messerbalken angelenkte, sich im Wesentlichen parallel zu dem Messerbalken erstreckende Koppelstange umfassen, welche mit ihrem freien Ende an einem drehfest mit einer Abtriebswelle verbunden Koppelelement angreift. Die Koppelstange kann die oszillierende Bewegung des Messerbalkens gleichförmig auf die Abtriebswelle übertragen, so dass diese innerhalb eines Winkelbereichs um eine Ausgangslage eine Pendelbewegung ausführt.

Bevorzugt kann die Antriebsvorrichtung eine Antriebswelle umfassen, die durch eine Kupplung mit der Abtriebswelle lösbar verbunden ist. Die Kupplung kann bevorzugt als eine Klauenkupplung ausgeführt sein. Durch die Kupplung können die an dem Trennmesser angeordnete Antriebswelle und die an dem Schneidwerk angeordnete Abtriebswelle getrennt werden, um die Trennmesser vom Schneidwerk lösen zu können. Die als Klauenkupplung ausgeführte Kupplung fungiert dabei als Überlastsicherung für das jeweilige Trennmesser. Hierzu kann die Klauenkupplung mit einer Federkraft beaufschlagt sein. Die Beaufschlagung der Klauenkupplung mit der Federkraft erfolgt auf Seiten des Vorsatzgerätes, so dass ein spielfreies Ankoppeln des Trennmessers möglich ist.

Weiterhin können am freien Ende der Antriebswelle zwei Hebel exzentrisch zur Längsachse der Antriebswelle angelenkt sein, wobei ein Hebel mit einem Obermesser und der andere Hebel mit einem Untermesser des Trennmessers verbunden ist, wobei das Obermesser und das Untermesser parallel zueinander angeordnet sind. Die beiden exzentrisch zur Längsachse der Antriebswelle angelenkten Hebel übertragen die Pendelbewegung der Antriebswelle auf das Obermesser bzw. das Untermesser, so dass diese eine oszillierende translatorische Bewegung ausführen können.

Insbesondere kann das Trennmesser einen Tragrahmen aufweisen, an welchem das Obermesser und das Untermesser angeordnet sind, welche in an dem Schneidwerk montierter Position des Trennmessers in Mährichtung weisen, wobei auf der dem Obermesser und dem Untermesser abgewandten Seite des Tragrahmens Mittel zur lösbaren Verbindung mit dem Rahmen respektive an den äußeren Enden des Rahmens angeordneten Seitenwänden vorgesehen sind.

Zur Begrenzung der translatorischen Bewegung von Obermesser und Untermesser ist vorgesehen, dass für den Fall einer blockierenden Kupplung der Verstellweg der beiden an dem freien Ende der Antriebswelle angeordneten Hebel in vertikaler Richtung durch jeweils ein Begrenzungsmittel limitiert ist. Das jeweilige Begrenzungsmittel kann dazu als ein Anschlag ausgeführt sein, welcher die vertikale Bewegung von einem jeweils endseitig an den Hebeln angeordneten Übertragungselement in beiden Richtungen, nach oben und nach unten, begrenzt. Die Übertragungselemente übertragen die Pendelbewegung der Hebel um die Antriebswelle als Auf- und Abbewegung auf das Obermesser bzw. Untermesser.

Bevorzugt können die Mittel einen halbschalenförmigen Abschnitt im bodennahen Bereich des Trennmessers und einen hierzu beabstandet am Tragrahmen angeordneten Schnellspannverschluss umfassen, wobei der halbschalenförmige Abschnitt mit einer im bodennahen Bereich am Rahmen respektive Seitenwand angeordneten, im Wesentlichen parallel zum Messerbalken verlaufenden Schwenkachse in Eingriff bringbar ist. Mittels des halbschalenförmigen Abschnitts lässt sich der Tragrahmen formschlüssig mit der Schwenkachse in Eingriff bringen und um diese in Richtung des Schneidwerks schwenken.

Weiterhin kann der Schnellspannverschluss einen hakenförmigen Abschnitt aufweisen, welcher mit einer Ausnehmung im Rahmen des Schneidwerks in Eingriff bringbar ist. Um den hakenförmigen Abschnitt in seiner in Eingriff mit der Ausnehmung gebrachten Position zu fixieren, kann der Schnellspannverschluss mit einer Kniehebelanordnung ausgeführt sein. Hierdurch wird eine spielfreie und drehmomentsteife Verbindung zwischen dem Tragrahmen des Trennmessers und dem Rahmen des Schneidwerks geschaffen.

Gemäß einer Ausgestaltung, die nicht unter den beanspruchten Gegenstand fällt, kann an dem Rahmen ein um eine Drehachse schwenkbarer Halmteiler anstelle des Trennmessers lösbar montiert sein. Die Befestigung des Halmteilers erfolgt dabei an einer horizontal verlaufenden Drehachse an dem Rahmen, so dass der Halmteiler um diese in vertikaler Richtung ausgelenkt werden kann. Dies ermöglicht unterschiedliche Höheneinstellungen des Halmteilers.

Dabei kann an dem Rahmen zur Begrenzung der Auslenkung des Halmteilers in vertikaler Richtung ein Höheneinstellelement lösbar befestigt ist, wobei das Höheneinstellelement durch zumindest einen halbschalenförmigen Abschnitt mit der im bodennahen Bereich am Rahmen angeordneten Schwenkachse in Eingriff bringbar ist. Das Höheneinstellelement ist bevorzugt als ein längliches, plattenförmiges Bauteil ausgeführt und fungiert zugleich als Adapter für die Anbringung des Halmteilers. Das Höheneinstellelement kann an einem dem halbschalenförmigen Abschnitt gegenüberliegenden Ende ein Befestigungsmittel aufweisen, durch welches das Höheneinstellelement kraft- und/oder formschlüssig mit dem Rahmen verbindbar ist. Die Anordnung des Höheneinstellelementes erfolgt somit unter Verwendung zumindest eines Teils der am Rahmen angeordneten Mittel, die auch zur lösbaren Verbindung des Trennmessers verwendet werden.

Bevorzugt kann zur Begrenzung der vertikalen Auslenkung und zur Führung des Halmteilers in dem Höheneinstellelement ein Langloch vorgesehen sein, durch das sich ein Tragarm des Halmteilers erstreckt. Der sich durch das Langloch erstreckende Tragarm ist mit einem freien Ende an der Drehachse des Rahmens lösbar angelenkt. Der Tragarm des Halmteilers ist von einer Aufnahme gehalten, welche in Längsrichtung des Höheneinstellelementes, d.h. in vertikaler Richtung, verschieblich ist. Die Aufnahme ist im unteren, dem Messerbalken zugewandten Bereich des Langlochs angeordnet. Die Aufnahme ist nach oben hin offen ausgeführt. Der Tragarm kann somit der in der Aufnahme abgelegt werden und wird aufgrund der Schwerkraft in der Aufnahme gehalten. Unterhalb der Aufnahme ist ein plattenförmiger Abschnitt angeordnet, der relativ zu dem Höheneinstellelement verschiebbar ist. Mittels einer Arretiervorrichtung ist der plattenförmige Abschnitt in verschiedenen Höhenpositionen festlegbar. Durch das Verschieben und anschließende Arretieren des plattenförmigen Abschnitts lässt sich die Höhe des Halmteilers einstellen.

Die vorliegende Erfindung wird nachstehend anhand eines in den Zeichnungen dargestellten Ausführungsbeispieles näher erläutert.

Es zeigen:
- Fig. 1: eine schematische Darstellung eines Schneidwerks mit daran angeordneten Trennmessern;
- Fig. 2: eine Teilansicht einer Antriebsvorrichtung des Trennmessers;
- Fig. 3: eine Teilansicht des Schneidwerks von schräg vorne;
- Fig. 4: eine Ansicht schneidwerkseitiger Komponenten der Antriebsvorrichtung sowie ein Koppelgetriebe;
- Fig. 5: eine Ansicht trennmesserseitiger Komponenten der Antriebsvorrichtung; und
- Fig. 6: eine Teilansicht des Schneidwerks sowie eines Höheneinstellelementes zur höhenverstellbaren Anbringung eines Halmteilers.

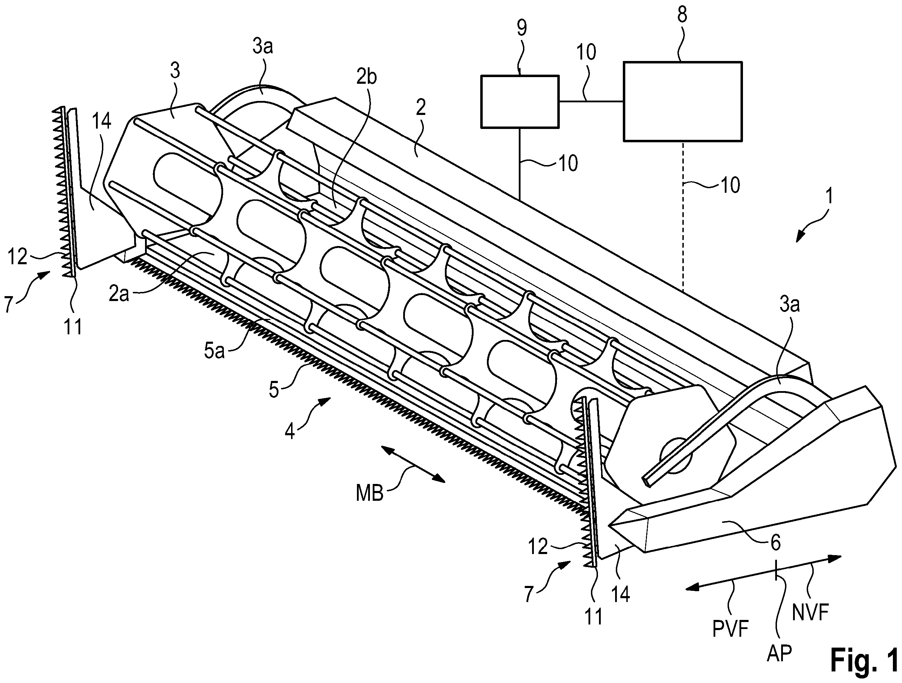

Fig. 1 zeigt eine schematische Darstellung eines Schneidwerks 1 mit endseitig angeordneten Trennmessern 7. Das Schneidwerk 1 wird von einem - nicht dargestellten - Mähdrescher aufgenommen und durch diesen angetrieben. Hierzu wird das Schneidwerk 1 mit einem mechanischen Antriebsstrang des Mähdreschers gekoppelt. Zudem kann eine Anbindung des Schneidwerks 1 an ein Hydrauliksystem des Mähdreschers vorgesehen sein, um Komponenten des Schneidwerks 1, wie beispielsweise eine Haspel 3, hydraulisch anzutreiben. Die Haspel 3 ist mittels Tragarmen 3a an der Schneidwerksmulde 2b geführt und gegenüber dieser in oder entgegen einer Mährichtung verstellbar. Weiterhin kann das Schneidwerk 1 durch zumindest eine Zuleitung 10 mit einer Steuerungsvorrichtung 8 des Mähdreschers verbunden. Weiterhin ist dem Schneidwerk 1 eine Bedieneinrichtung 9 zugeordnet, welche vorzugsweise in einer Kabine des Mähdreschers angeordnet ist. Dabei kann die Bedieneinrichtung 9 in die Steuerungsvorrichtung 8 des Mähdreschers integriert sein. Die Bedieneinrichtung 9 kann auch unmittelbar an dem Schneidwerk 1 angeordnet sein.

Das Schneidwerk 1 umfasst einen Rahmen 2 mit einem Schneidtisch 2a, an den sich eine Schneidmulde 2b anschließt. In der schematischen Darstellung ist der Schneidtisch 2a von der Schneidwerksmulde 2b separiert und gegenüber dieser längsverschiebbar ausgeführt. Die Längsverschiebbarkeit des Schneidtischs 2a ermöglicht eine Anpassung an unterschiedliche Erntegutarten. Hierzu ist der Schneidtisch 2a entlang eines Verfahrweges verstellbar, wobei dieser ausgehend von einer Ausgangsposition AP in Mährichtung ausgefahren wird, was einem positiven Verfahrweg PVF entspricht. Darüber hinaus ist der Schneidtisch 2a über die Ausgangsposition AP hinweg entgegen der Mährichtung verfahrbar, was einem negativen Verfahrweg NVF entspricht. Der positive Verfahrweg PVF ist größer als der negative Verfahrweg NVF des Schneidtisches 2a. An der Vorderkante des Schneidtischs 2a ist ein horizontal verlaufender, angetriebener Messerbalken 4 angeordnet ist, der an zumindest einer hin und her beweglichen Messerschiene 5a angeordnete Mähmesser 5 aufweist. Die oszillierende Bewegung des Messerbalkens 4 wird durch den Pfeil MB veranschaulicht. An dem Rahmen 2 sind an beiden außenseitigen Enden mehrteilige Seitenwände 6 angeordnet, die in Mährichtung respektive Fahrrichtung des Mähdreschers weisen. Die mehrteiligen Seitenwände 6 sind partiell zusammen mit dem Schneidtisch 2a längsverschiebbar. Weiterhin sind jeweils endseitig an dem Rahmen 2 lösbar befestigbare Trennmesser 7 angeordnet, welche sich im Wesentlichen vertikal zu dem Messerbalken 4 erstrecken. Die Trennmesser 7 sind gemeinsam mit dem Schneidtisch 2a und den verschiebbaren Teilen der Seitenwänden 6 entlang des gesamten Verfahrweges, d.h. sowohl entlang des positiven Verfahrweges PVF als auch des negativen Verfahrweges NVF, kollisionsfrei verschiebbar. Die Trennmesser 7 weisen jeweils oszillierend angetriebene, parallel zueinander angeordnete Mähbalken 11 auf. Die Mähbalken 11 sind in vertikaler Richtung durch Führungselemente 21 geführt. An jeweils einem Mähbalken 11 sind Obermesser 12 bzw. Untermesser 13 angeordnet. Die Obermesser 12 und Untermesser 13 bewegen sich oszillierend in vertikaler Richtung (Pfeil 15). Dabei bewegen sich das Obermesser 12 und das Untermesser 13 gegenläufig. Zur Anbringung der Trennmesser 7 an dem Schneidtisch 2a weist jedes Trennmesser 7 einen Tragrahmen 14 auf. Die Bedieneinrichtung 9 kann der Bedienung des Schneidwerkes 1 dienen, zumindest um zumindest eines der Trennmesser 7 im laufenden Betrieb des Messerbalkens 4 zu- und abschalten zu können.

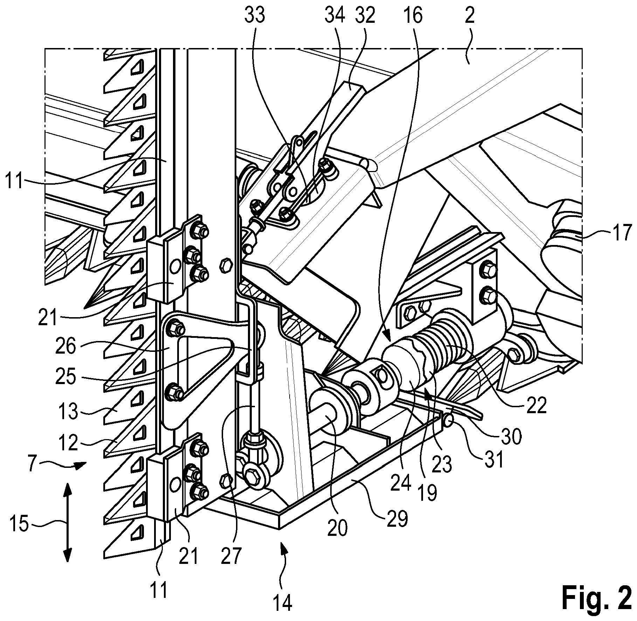

In Fig. 2 ist eine schematische Darstellung einer Antriebsvorrichtung 16 zum mechanischen Antreiben des Trennmessers 7 gezeigt. Die in der Fig. 2 dargestellte Antriebsvorrichtung 16 kommt auf beiden Seiten des Schneidwerks 1 zum Antreiben des jeweiligen Trennmessers 7 zum Einsatz. Wegen der identischen Ausgestaltung der beiden Antriebsvorrichtungen 16 des jeweiligen Trennmessers 7 gilt die nachfolgende Beschreibung der in Fig. 2 gezeigten Antriebsvorrichtung 16 entsprechend auch für die gegenüberliegend angeordnete - nicht dargestellte - Antriebsvorrichtung.

Der Messerbalken 4 wird durch zumindest ein endseitig an dem Rahmen 2 angeordnetes Getriebe 17 angetrieben. Das zumindest eine Getriebe 17 ist mit einer als Gelenkwelle ausgeführten Antriebswelle verbunden, die an dem Schneidwerk 1 angeordnet ist. Durch das jeweilige Getriebe 17 wird eine Rotationsbewegung der Antriebswelle in eine oszillierende translatorische Bewegung der an der Messerschiene 5a angeordneten Mähmesser 5 umgesetzt. Die jeweilige Antriebsvorrichtung 16 der Trennmesser 7 umfasst eine Abtriebswelle 18, auf welcher eine Druckfeder 22 angeordnet ist, eine als Klauenkupplung ausgeführte Kupplung 19, mit zwei Kupplungshälften 23, 24, sowie eine Antriebswelle 20. Die eine Kupplungshälfte 23 ist endseitig an der Abtriebswelle 18 angeordnet, während die andere Kupplungshälfte 24 endseitig an der gegenüberliegenden Antriebswelle 20 angeordnet ist. Die Abtriebswelle 18 und die Kupplungshälfte 23 bilden schneidwerkseitig angeordnete Komponenten der Antriebsvorrichtung 16, während die Kupplungshälfte 24 und die Abtriebswelle 20 die trennmesserseitig angeordneten Komponenten der Antriebsvorrichtung 16 bilden. Die Antriebsvorrichtung 16 ist in einem bodennahen Bereich des Schneidwerks 1 angeordnet. Bodennahe Anordnung der Antriebsvorrichtung 16 bedeutet, dass die Komponenten der Antriebsvorrichtung 16, die schneidtischseitig am Schneidwerk 1 angeordnet sind, auf gleicher Höhe mit dem zumindest einen Getriebe 17 oder unterhalb des zumindest einen Getriebes 17, das den Messerbalken 4 antreibt, angeordnet sind. Hierdurch wird ein gegenüber der Haspel 3 kollisionsfreies Verschieben der Trennmesser 7 erreicht.

An dem jeweiligen Mähbalken 11 ist zur Begrenzung der translatorischen Bewegung von Obermesser 12 und Untermesser 13 jeweils ein Begrenzungsmittel 25 vorgesehen, um für den Fall, dass die Kupplung 19 blockiert, die von Obermesser 12 und Untermesser 13 sowohl aufwärts als auch abwärts gerichteten Vertikalbewegungen zu begrenzen. Hierzu ist an jedem Mähbalken 11 ein Übertragungselement 26 angeordnet, welches in vertikaler Richtung in dem als Langloch ausgeführten Begrenzungsmittel 25 geführt ist. An dem freien Ende der Antriebswelle 20 sind zwei Hebel 27, 28 beabstandet zueinander und exzentrisch zur Längsachse der Antriebswelle 20 an dieser angelenkt, wobei ein Hebel 27, 28 mit dem Obermesser 12 und der andere Hebel 28 mit dem Untermesser 13 des Trennmessers 7 durch das jeweilige Übertragungselement 26 verbunden ist.

An dem Tragrahmen 14 ist ein sich im Wesentlichen in horizontaler Richtung erstreckendes Bodenblech 29 angeordnet, oberhalb dessen sich die Komponenten der Antriebsvorrichtung 16 befinden. Am dem Schneidtisch 2a zugewandten Ende des Bodenblechs 29 ist ein halbschalenförmiger Abschnitt 30 angeordnet. Der halbschalenförmige Abschnitt 30 lässt sich mit einer mit einer im bodennahen Bereich am Rahmen 2 angeordneten, im Wesentlichen parallel zum Messerbalken 4 verlaufenden Schwenkachse 31 in formschlüssig Eingriff bringen. Der Tragrahmen 14 ist um die Schwenkachse 31 schwenkbar. Die Darstellung in Fig. 2 zeigt das Trennmesser 7 in seiner an dem Schneidwerk 1 arretierten Position. Hierzu ist ein Schnellspannverschluss 32 an dem Tragrahmen 14 angeordnet, welcher mit dem Rahmen 2 lösbar verbunden ist. Der Schnellspannverschluss 32 weist einen hakenförmigen Abschnitt 33 auf, welcher mit einer Ausnehmung 34 im Rahmen 2 in Eingriff bringbar ist. Der Schnellspannverschluss 32 kann als eine Art Kniehebelanordnung ausgeführt sein. Der zur Fixierung des Tragrahmens 14 in die Ausnehmung 34 eingreifende hakenförmigen Abschnitt 33 ermöglicht eine spielfreie und drehmomentsteife Verbindung des Tragrahmens 14 am Rahmen 2.

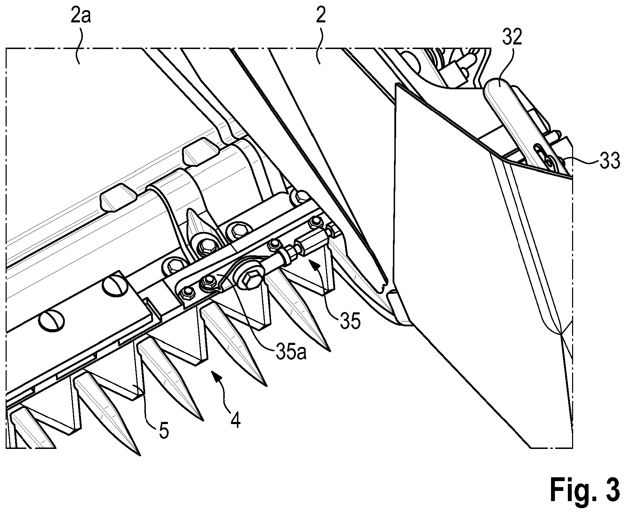

Die Darstellung in Fig. 3 zeigt eine Teilansicht des Schneidwerks 1 von schräg vorne. Benachbart zur Seitenwand 6 ist ein Koppelgetriebe 35 an dem Messerbalken 4 angeordnet. Das Koppelgetriebe 35 umfasst ein Halteelement 37, welches an dem Messerbalken 4 befestigt ist. An dem Halteelement 37 ist eine Koppelstange 36 angelenkt, die im Wesentlichen parallel zum Messerbalken 4 verläuft und sich in das Innere der Seitenwand 6 erstreckt.

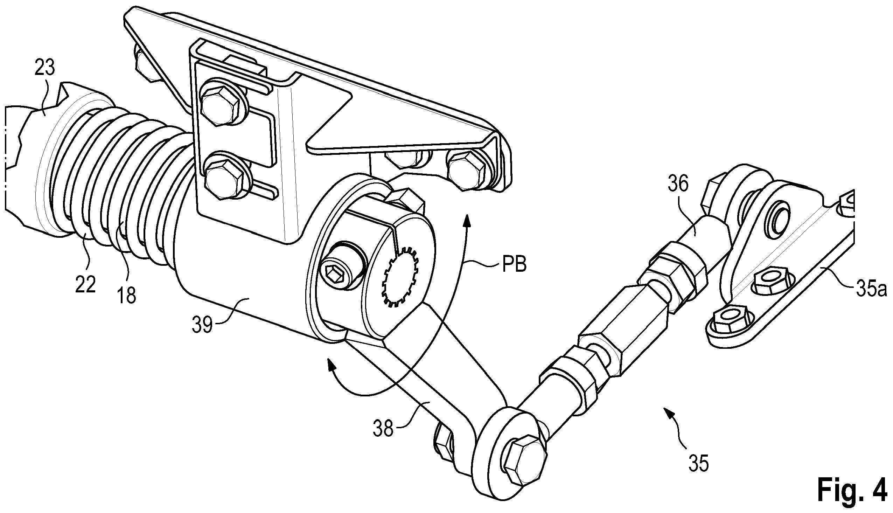

In Fig. 4 ist eine Ansicht der schneidwerkseitigen Komponenten der Antriebsvorrichtung 16 sowie das Koppelgetriebe 35 dargestellt. Die Koppelstange 36 ist mit ihrem freien Ende an einem Koppelelement 38 angelenkt. Das Koppelelement 38 ist drehfest mit der Abtriebswelle 18 der Antriebsvorrichtung 16 verbunden. Die Abtriebswelle 18 ist hierfür in einem hohlzylindrischen Abschnitt 39 drehbar gelagert, der an dem Rahmen 2 bzw. der Seitenwand 6 befestigt ist. Die oszillierende translatorische Bewegung (Pfeil MB) des Messerbalkens 4 wird von dem Koppelgetriebe 35 in eine Pendelbewegung PB der Abtriebswelle 18 der Antriebsvorrichtung 16 überführt.

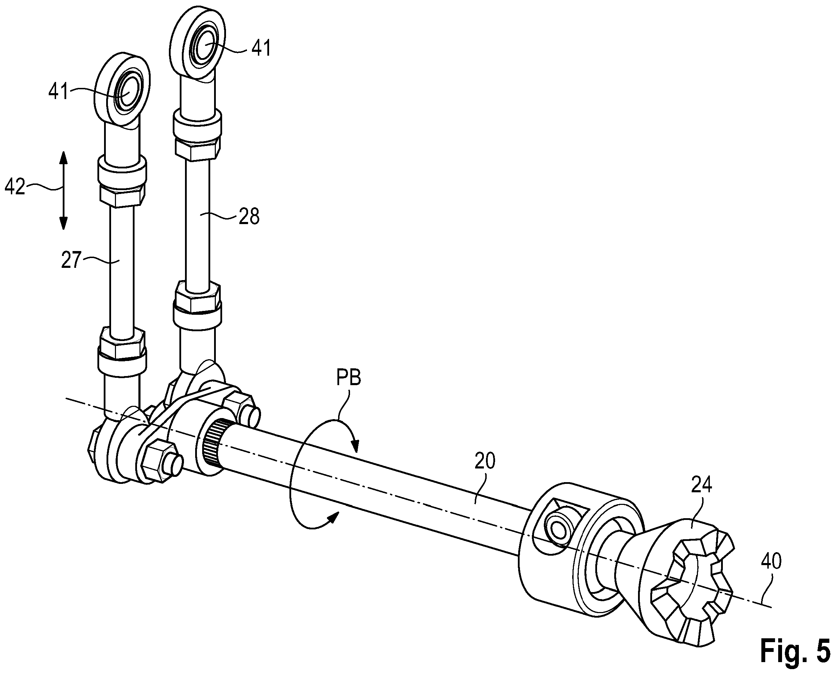

Fig. 5 zeigt eine Darstellung der trennmesserseitigen Komponenten der Antriebsvorrichtung 16. Am freien Ende der Antriebswelle 20 sind die zwei Hebel 27, 28 exzentrisch zur Längsachse 40 der Antriebswelle 20 angelenkt. Der Hebel 27 ist mit dem Obermesser 12 und der andere Hebel 28 mit dem Untermesser 13 des Trennmessers 7 verbunden. Die Hebel 27, 28 weisen an ihrem der Antriebswelle 18 abgewandten Ende Lagerstellen 41 auf, in welchen das jeweilige Übertragungselement 26 von Obermesser 12 bzw. Untermesser 13 angelenkt ist. Die Pendelbewegung PB der Abtriebswelle 18 wird durch die Kupplung 19 auf die Antriebswelle 20 übertragen. Die exzentrisch an dem freien Ende der Antriebswelle 20 angelenkten Hebel 27 und 28 werden durch die übertrage Pendelbewegung PB zu einer vertikal gerichteten Auf- und Abbewegung 42 angeregt. Dabei bewegen sich die Hebel 27, 28 gegensinnig, was zu der korrespondierenden Bewegung (Pfeil 15) von Obermesser 12 und Untermesser 13 führt.

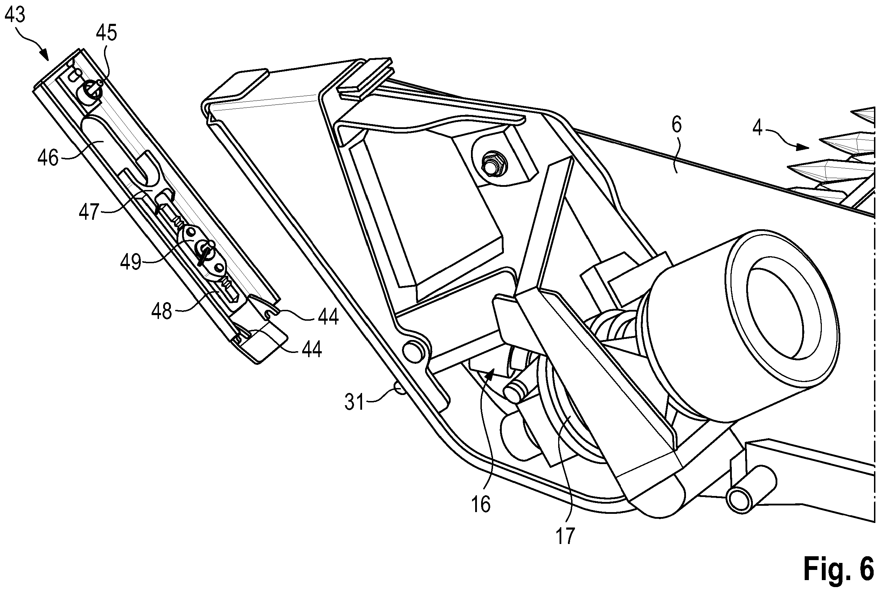

In Fig. 6 ist eine Teilansicht des Schneidwerks sowie ein Höheneinstellelement 43 zur höhenverstellbaren Anbringung eines auswechselbaren Halmteilers dargestellt. Dabei wird der - nicht dargestellte - Halmteiler gemäß einer nicht beanspruchten Ausführungsform anstelle des Trennmessers 7 an der Seitenwand 6 des Rahmens 2 lösbar befestigt. Hierzu weist das Höheneinstellelement 43 zumindest einen halbschalenförmigen Abschnitt 44 auf, welcher mit der im bodennahen Bereich an der Seitenwand 6 des Rahmens 2 angeordneten Schwenkachse 31 in Eingriff bringbar ist. Das Höheneinstellelement 43 ist bevorzugt als ein längliches, plattenförmiges Bauteil ausgeführt und fungiert zugleich als Adapter für die Anbringung des Halmteilers. Das Höheneinstellelement 43 kann an einem dem halbschalenförmigen Abschnitt gegenüberliegenden Ende ein Befestigungsmittel 45 aufweisen, durch welches das Höheneinstellelement 43 kraft- und/oder formschlüssig mit der Seitenwand 6 an dem Rahmen 2 verbindbar ist. Die Anordnung des Höheneinstellelementes 43 erfolgt somit unter Verwendung zumindest eines Teils der an der Seitenwand 6 des Rahmens 2 angeordneten Mittel, d.h. der Schwenkachse 31, die auch zur lösbaren Verbindung des Trennmessers 7 verwendet wird.

Zur Begrenzung der vertikalen Auslenkung und zur Führung des Halmteilers ist ein Langloch 46 in dem Höheneinstellelement 43 vorgesehen, durch welches sich ein - nicht dargestellter - Tragarm des Halmteilers erstreckt. Der sich durch das Langloch 46 erstreckende Tragarm ist mit einem freien Ende an einer Schwenkachse im Inneren der Seitenwand 6 des Rahmens 2 lösbar angelenkt. Der Tragarm des Halmteilers ist von einer Aufnahme 47 gehalten, welche in Längsrichtung des Höheneinstellelementes 43 verschieblich ist. Die Aufnahme 47 ist im unteren, dem Messerbalken 4 zugewandten Bereich des Langlochs 46 angeordnet. Die Aufnahme 47 ist nach oben hin offen ausgeführt. Der Tragarm kann somit der in der Aufnahme 47 abgelegt werden und wird aufgrund der Schwerkraft in der Aufnahme 47 gehalten. Unterhalb der Aufnahme 47 ist ein plattenförmiger Abschnitt 48 angeordnet, der gemeinsam mit der Aufnahme 47 relativ zu dem Höheneinstellelement 43 in Längsrichtung, d.h. vertikaler Richtung, verschiebbar ist. Mittels einer Arretiervorrichtung 49 ist der plattenförmige Abschnitt 48 in verschiedenen Höhenpositionen festlegbar. Durch das Verschieben und anschließende Arretieren des plattenförmigen Abschnitts 48 lässt sich die Höhe des Halmteilers einstellen.

**Bezugszeichenliste**

| | | | |
|---|---|---|---|
| 1 | Schneidwerk | 27 | Hebel |
| 2 | Rahmen | 28 | Hebel |
| 2a | Schneidtisch | 29 | Bodenblech |
| 2b | Schneidmulde | 30 | Abschnitt |
| 3 | Haspel | 31 | Schwenkachse |
| 3a | Tragarm | 32 | Schnellspannverschluss |
| 4 | Messerbalken | 33 | Abschnitt |
| 5 | Mähmesser | 34 | Ausnehmung |
| 5a | Messerschiene | 35 | Koppelgetriebe |
| 6 | Seitenwand | 36 | Koppelstange |
| 7 | Trennmesser | 37 | Halteelement |
| 8 | Steuerungsvorrichtung | 38 | Koppelelement |
| 9 | Bedieneinrichtung | 39 | Abschnitt |
| 10 | Zuleitung | 40 | Längsachse |
| 11 | Mähbalken | 41 | Lagerstelle |
| 12 | Obermesser | 42 | Auf- und Abbewegung |
| 13 | Untermesser | 43 | Höheneinstellelement |
| 14 | Tragrahmen | 44 | Abschnitt |
| 15 | Pfeil | 45 | Befestigungsmittel |
| 16 | Antriebsvorrichtung | 46 | Langloch |
| 17 | Getriebe | 47 | Aufnahme |
| 18 | Abtriebswelle | 48 | Abschnitt |
| 19 | Kupplung | 49 | Arretiervorrichtung |
| 20 | Antriebswelle | | |
| 21 | Führungselement | MB | Pfeil |
| 22 | Druckfeder | AP | Ausgangspunkt |
| 23 | Kupplungshälfte | PVF | Positiver Verfahrweg |
| 24 | Kupplungshälfte | NVF | Negativer Verfahrweg |
| 25 | Begrenzungsmittel | PB | Pendelbewegung |
| 26 | Übertragungselement | | |

## Patentansprüche

1. Schneidwerk (1), mit einem Rahmen (2) und einer daran angeordneten Schneidwerksmulde (2b), einem der Schneidwerksmulde (2b) vorgeordneten Schneidtisch (2a) mit einem daran angeordneten, durch zumindest ein Getriebe (17) oszillierend angetriebenen Messerbalken (4), einer rotativ angetriebenen Haspel (3), die mittels Tragarmen (3a) an der Schneidwerksmulde (2b) geführt und gegenüber dieser in oder entgegen einer Mährichtung verstellbar ist, sowie zumindest einem endseitig an dem Rahmen (2) lösbar angeordneten Trennmesser (7), welches sich im Wesentlichen vertikal zu dem Messerbalken (4) erstreckt, **dadurch gekennzeichnet, dass** der Schneidtisch (2a) gegenüber der Schneidwerksmulde (2b) in oder entgegen der Mährichtung verschiebbar ist, wobei sich
eine Antriebsvorrichtung (16) des zumindest einer
Trennmessers (7) in einem bodennahen Bereich befindet, wobei die Antriebsvorrichtung (16) durch ein Koppelgetriebe (35) mit dem Messerbalken (4) verbunden ist, welches die oszillierende Bewegung des Messerbalkens (4) auf das zumindest eine Trennmesser (7) übertragt.

2. Schneidwerk (1) nach Anspruch 1, **dadurch gekennzeichnet, dass** das Koppelgetriebe (35) eine an dem Messerbalken (4) angelenkte, sich im Wesentlichen parallel zu dem Messerbalken (4) erstreckende Koppelstange (36) umfasst, welche mit ihrem freien Ende an einem drehfest mit einer Abtriebswelle (18) verbunden Koppelelement (38) angreift.

3. Schneidwerk (1) nach Anspruch 2, **dadurch gekennzeichnet, dass** die Antriebsvorrichtung (16) eine Antriebswelle (20) umfasst, die durch eine Kupplung (19) mit der Abtriebswelle (18) lösbar verbunden ist.

4. Schneidwerk (1) nach Anspruch 3, **dadurch gekennzeichnet, dass** am freien Ende der Antriebswelle (20) zwei Hebel (27, 28) exzentrisch zur Längsachse (40) der Antriebswelle (20) angelenkt sind, wobei ein Hebel (27) mit einem Obermesser (12) und der andere Hebel (28) mit einem Untermesser (13) des Trennmessers (7) verbunden ist, wobei das Obermesser (12) und das Untermesser (13) parallel zueinander angeordnet sind.

5. Schneidwerk (1) nach Anspruch 4, **dadurch gekennzeichnet, dass** das Trennmesser (7) einen Tragrahmen (14) aufweist, an welchem das Obermesser (12) und das Untermesser (13) angeordnet sind, welche in an dem Schneidwerk (1) montierter Position des Trennmessers (7) in Mährichtung weisen, wobei auf der dem Obermesser (12) und Untermesser (13) abgewandten Seite des Tragrahmens (14) Mittel zur lösbaren Verbindung mit dem Rahmen (2) vorgesehen sind.

6. Schneidwerk (1) nach Anspruch 5, **dadurch gekennzeichnet, dass** die Mittel einen halbschalenförmigen Abschnitt (30) im bodennahen Bereich des Trennmessers (7) und einen hierzu beabstandet am Tragrahmen (14) angeordneten Schnellspannverschluss (32) umfassen, wobei der halbschalenförmige Abschnitt (30) mit einer im bodennahen Bereich am Rahmen (2) angeordneten Schwenkachse (31) in Eingriff bringbar ist.

7. Schneidwerk (1) nach Anspruch 6, **dadurch gekennzeichnet, dass** der Schnellspannverschluss (32) einen hakenförmigen Abschnitt (33) aufweist, welcher mit einer Ausnehmung (34) im Rahmen (2) in Eingriff bringbar ist.

## Claims

1. A cutting assembly (1), with a frame (2) and a cutting assembly base (2b) disposed thereon, a cutting platform (2a) disposed in front of the cutting assembly base (2b) having a cutter bar (4) disposed thereon which is driven in oscillation by means of at least one transmission (17), a reel (3) which is driven in rotation and which is guided on the cutting assembly base (2b) by means of support arms (3a) and which can be adjusted with respect thereto in or against a direction of cutting, as well as at least one separating blade (7) which is releasably disposed on the end of the frame (2) and which extends substantially vertically to the cutter bar (4), **characterized in that** the cutting platform (2a) can be displaced in or against the direction of cutting with respect to the cutting assembly base (2b), wherein a drive device (16) for the at least one separating blade (7) is located in a region close to the ground, wherein the drive device (16) is connected to the cutter bar (4) via a linkage (35) which transmits the oscillatory movement of the cutter bar (4) to the at least one separating blade (7).

2. The cutting assembly (1) according to claim 1, **characterized in that** the linkage (35) comprises a coupling rod (36) which is articulated on the cutter bar (4) and which extends substantially parallel to the cutter bar (4), the free end of the coupling rod engaging with a coupling element (38) which is connected to a take-off shaft (18) in a manner which is fixed against rotation.

3. The cutting assembly (1) according to claim 2, **characterized in that** the drive device (16) comprises a drive shaft (20) which is releasably connected to the take-off shaft (18) via a clutch (19).

4. The cutting assembly (1) according to claim 3, **characterized in that** two levers (27, 28) are articulated eccentrically with respect to the longitudinal axis (40) of the drive shaft (20) at the free end of the drive shaft (20), wherein one lever (27) is connected to an upper blade (12) and the other lever (28) is connected to a lower blade (13) of the separating blade (7), wherein the upper blade (12) and the lower blade (13) are disposed parallel to each other.

5. The cutting assembly (1) according to claim 4, **characterized in that** the separating blade (7) has a support frame (14) on which the upper blade (12) and the lower blade (13) are disposed and which point in the direction of cutting in the mounted position of the separating blade (7) on the cutting assembly (1), wherein means for releasable connection to the frame (2) are provided on the side of the support frame (14) pointing away from the upper blade (12) and the lower blade (13).

6. The cutting assembly (1) according to claim 5, **characterized in that** the means comprise a half-shell shaped section (30) in the region of the separating blade (7) which is near to the ground and a quick release latch (32) disposed at a distance to the half-shell shaped section on the support frame (14), wherein the half-shell shaped section (30) can be brought into engagement with a pivot axis (31) disposed on the frame (2) in the region which is near to the ground.

7. The cutting assembly (1) according to claim 6, **characterized in that** the quick release latch (32) has a hook-shaped section (33) which can be brought into engagement with a recess (34) in the frame (2).

## Revendications

1. Tablier de coupe (1) comprenant un châssis (2) et un bac de tablier de coupe (2b) fixé dessus, comprenant une table de coupe (2a) disposée en avant du bac de tablier de coupe (2b) avec un lamier (4) disposé dessus, entraîné de façon oscillante par l'intermédiaire d'au moins une transmission (17), comprenant un rabatteur entraîné en rotation (3), lequel est guidé au moyen de bras porteurs (3a) contre le bac de tablier de coupe (2b) et est réglable par rapport à celui-ci dans ou à l'opposé d'une direction de moissonnage, ainsi que comprenant au moins une scie (7) disposée en bout de façon amovible sur le châssis (2), laquelle s'étend sensiblement verticalement par rapport au lamier (4), **caractérisé en ce que** la table de coupe (2a) est déplaçable par rapport au bac de tablier de coupe (2b) dans ou à l'opposé de la direction de moissonnage, un dispositif d'entraînement (16) de ladite au moins une scie (7) se trouvant dans une zone proche du sol, le dispositif d'entraînement (16) étant relié au lamier (4) par l'intermédiaire d'un mécanisme d'accouplement (35) qui transmet le mouvement oscillant du lamier (4) à la au moins une scie (7).

2. Tablier de coupe (1) selon la revendication 1, **caractérisé en ce que** le mécanisme d'accouplement (35) inclut une tige d'accouplement (36) articulée sur le lamier (4), s'étendant sensiblement parallèlement au lamier (4), laquelle agit par son extrémité libre sur un élément d'accouplement (38) solidarisé en rotation avec un arbre mené (18).

3. Tablier de coupe (1) selon la revendication 2, **caractérisé en ce que** le dispositif d'entraînement (16) inclut un arbre menant (20) qui est relié à l'arbre mené (18) de façon amovible par l'intermédiaire d'un accouplement (19) .

4. Tablier de coupe (1) selon la revendication 3, **caractérisé en ce qu'**à l'extrémité libre de l'arbre menant (20) sont articulés deux leviers (27, 28) de manière excentrique par rapport à l'axe longitudinal (40) de l'arbre menant (20), un levier (27) étant relié à une lame supérieure (12) et l'autre levier (28) l'étant à une lame inférieure (13) de la scie (7), la lame supérieure (12) et la lame inférieure (13) étant disposées parallèlement l'une à l'autre.

5. Tablier de coupe (1) selon la revendication 4, **caractérisé en ce que** la scie (7) comporte un châssis porteur (14) sur lequel sont disposées la lame supérieure (12) et la lame inférieure (13), lesquelles sont tournées dans la direction de moissonnage dans la position de la scie (7) montée sur le tablier de coupe (1), sur le côté du châssis porteur (14) situé à l'opposé de la lame supérieure (12) et de la lame inférieure (13) étant prévus des moyens pour une liaison détachable avec le châssis (2).

6. Tablier de coupe (1) selon la revendication 5, **caractérisé en ce que** les moyens incluent une portion en demi-coque (30) dans la zone proche du sol de la scie (7) et une fermeture à serrage rapide (32) disposée à cet effet à distance sur le châssis porteur (14), la portion en demi-coque (30) pouvant être amenée en prise avec un axe de pivotement (31) disposé sur le châssis (2) dans la zone proche du sol.

7. Tablier de coupe (1) selon la revendication 6, **caractérisé en ce que** la fermeture à serrage rapide (32) comporte une portion en forme de crochet (33) qui peut être amenée en prise avec un évidement (34) dans le châssis (2).
